Europäisches Patentamt

(19) European Patent Office

Office européen des brevets

(11) Publication number: **0 174 822 B1**

## EUROPEAN PATENT SPECIFICATION

(45) Date of publication of patent specification: 24.07.91

(51) Int. Cl.⁵: **G11B 7/00**, G11B 20/18, H04N 5/94, H04N 9/89

(21) Application number: 85306396.4

(22) Date of filing: 09.09.85

(54) Drop-out correcting apparatus.

(30) Priority: 13.09.84 JP 190634/84

(43) Date of publication of application:
19.03.86 Bulletin 86/12

(45) Publication of the grant of the patent:
24.07.91 Bulletin 91/30

(84) Designated Contracting States:
CH DE FR GB IT LI NL

(56) References cited:
EP-A- 0 029 226
EP-A- 0 084 952
EP-A- 0 094 671
EP-A- 0 098 082
EP-A- 0 124 281

(73) Proprietor: **SONY CORPORATION**
**7-35 Kitashinagawa 6-Chome Shinagawa-ku**
**Tokyo 141(JP)**

(72) Inventor: **Tachibana, Kaoru c/o Patents Division**
**Sony Corporation 6-7-35 Kitashinagawa**
**Shinagawa-ku Tokyo 141(JP)**
Inventor: **Morita, Ken c/o Patents Division**
**Sony Corporation 6-7-35 Kitashinagawa**
**Shinagawa-ku Tokyo 141(JP)**

(74) Representative: **Thomas, Christopher Hugo et al**
**D Young & Co 10 Staple Inn**
**London WC1V 7RD(GB)**

## Description

This invention relates to drop-out correcting apparatus, and more particularly, but not exclusively, to drop-out correcting apparatus suitable for correcting drop-out of an analogue television signal which has been reproduced from a video disc.

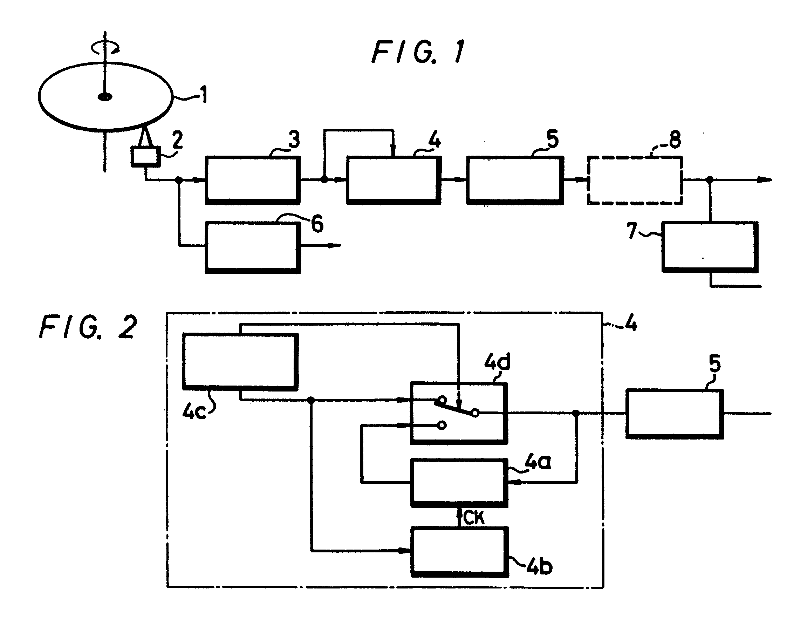

Figure 1 of the accompanying drawings is a block circuit diagram showing an example of a previously proposed reproducing circuit for a rotating video disc 1. An optical pick-up device 2 picks up a signal recorded on the video disc 1, a demodulating circuit 3 demodulates the reproduced video signal, a drop-out correcting circuit 4 corrects drop-out of the reproduced video signal, and a time base fluctuation correcting (TBC) circuit 5 removes a jitter component of the video signal. An audio signal demodulating circuit 6 is connected to the optical pick-up device 2, and a radio frequency (RF) modulator 7 is connected to the TBC circuit 5.

Since the video signal recorded on the video disc 1 is generally reproduced in the form of a standard composite video signal (of, for example, the NTSC system), it is corrected for drop-out by the drop-out correcting circuit 4, and then fed to the TBC circuit 5, in which its jitter component is removed, so it is then supplied as a normal and correct video signal. An audio signal is demodulated by the audio demodulating circuit 6.

In a video signal reproducing circuit as shown in Figure 1, drop-out of the video signal is corrected by the drop-out correcting circuit 4 when the video signal contains a jitter component, or alternatively, the drop-out of the video signal is corrected by a drop-out correcting circuit 8 which is connected at the output stage of the TBC circuit 5 as shown by a broken line in Figure 1.

Figure 2 of the accompanying drawings is a block circuit diagram showing the part of the drop-out correcting circuit 4 which carries out the drop-out correction prior to the TBC circuit 5. A delay element 4a corrects the time base fluctuation of a video signal one horizontal scanning period (1H) before. The delay element 4a is formed of a charge coupled device (CCD) the delay time of which can be varied by a clock signal CK supplied thereto. A phase locked loop (PLL) circuit 4b produces the clock signal CK which drives the delay element 4a. A drop-out detecting circuit 4c produces a drop-out flag when it detects a drop-out. A switching circuit 4d is changed over by the drop-out flag supplied thereto for the drop-out detecting circuit 4c, thereby to produce the video signal 1H before, only during the drop-out period.

In the drop-out correcting circuit 4, if the normal video signal having no drop-out is supplied thereto, the video signal is supplied as it is through the switching circuit 4d to the TBC circuit 5, while the video signal passed through the switching circuit 4d is also supplied to the delay element 4a, in which it is delayed by the time 1H.

Accordingly, if a video signal having a drop-out is then reproduced, the switching circuit 4d is changed over by the drop-out flag derived from the drop-out detecting circuit 4c, so that the video signal having the drop-out is replaced by the video signal 1H before, only during the drop-out period, and the drop-out portion thereof is corrected, before the video signal is fed to the TBC circuit 5.

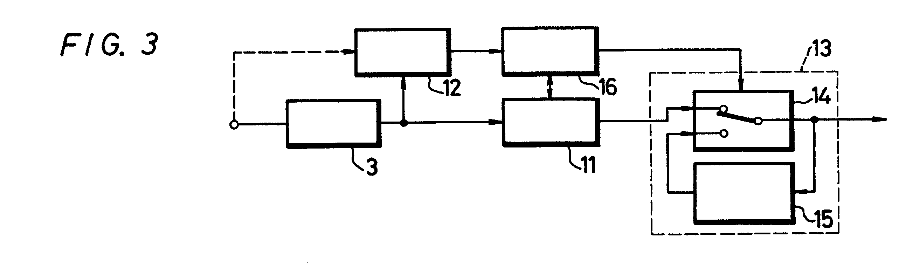

Figure 3 of the accompanying drawings is a block circuit diagram showing part of a prior art drop-out correcting circuit disclosed in the published document of Japanese patent application unexamined No. 58/120383, in which the drop-out correction is carried out after the TBC. Referring to Figure 3, the circuit comprises a TBC circuit 11 which carries out the time base correction of the video signal, a drop-out detecting circuit 12, a drop-out correcting circuit 13 formed of a switching circuit 14 and a 1H delay circuit 15, and a variable type delay circuit 16 which carries out the TBC for the drop-out flag in synchronism with the TBC circuit 11 thereby to synchronize the drop-out flag with the video signal, and which is formed of a CCD or a second TBC circuit.

In this drop-out correcting circuit, the normal video signal having no drop-out is corrected for time base fluctuation by the TBC circuit 11, and then supplied via the switching circuit 14.

If on the other hand the video signal has drop-out, the drop-out is detected by the drop-out detecting circuit 12, and the drop-out flag therefrom is supplied to the switching circuit 14 through the delay circuit 16 whose delay time is controlled in synchronism with the TBC circuit 11. As a result, the input to the switching circuit 14 is selectively changed by this drop-out flag, so that during the drop-out period, the normal video signal 1H before, derived from the 1H delay circuit 15, is supplied as a corrected signal, so that the drop-out is interpolated.

In this prior art drop-out correcting apparatus, when the drop-out correction is carried out before the time base fluctuation has been corrected, as shown in Figure 2, it is necessary to provide the variable delay element 4a for delaying the normal video signal which is used to replace the signal to be corrected in the switching circuit 4d, and the PLL circuit 4b which drives this delay circuit 4a, in order that the normal video signal and the signal to be corrected are synchronized with each other.

Alternatively, when the drop-out correction is carried out after the time base fluctuation has been corrected, as shown in Figure 3, the drop-out detecting signal must be corrected for time base fluctuation so as to be synchronized with the signal to be corrected, and then fed to the switching circuit 14. Therefore, the delay circuit 16 will have to be provided.

Thus, the prior art drop-out correcting apparatus is somewhat complex, is expensive, and needs substantial circuit maintenance.

European patent application EP-A2-0 124 281 (published 7 November 1984 and thus being prior art under Art. 54(3) EPC) discloses a drop-out compensation method which is similar to that disclosed and claimed herein. The disclosure in EP-A2-0 124 281 is however entirely restricted to digital signals.

According to the present invention there is provided a drop-out correcting apparatus comprising:

a drop-out detecting circuit for detecting a drop-out period from a reproduced analogue radio frequency signal or reproduced analogue video signal;

a mixing circuit for superimposing a drop-out detecting signal from said drop-out detecting circuit upon said reproduced signal;

a time base fluctuation correcting circuit for removing a jitter component of a mixed signal from said mixing circuit;

a drop-out detecting signal separating circuit for separating said drop-out detecting signal from an output signal derived from said time base fluctuation correcting circuit; and

a drop-out correcting circuit which corrects a drop-out of said output signal by said separated drop-out detecting signal.

The invention will now be described by way of example with reference to the accompanying drawings, throughout which like parts are referred to by like references, and in which:

Figure 1 is block circuit diagram of a previously proposed reproducing apparatus for reproducing a video signal from a video disc;

Figure 2 is a block circuit diagram showing a previously proposed drop-out correcting apparatus for correcting a drop-out in the stage prior to a time base corrector;

Figure 3 is a block circuit diagram showing a previously proposed drop-out correcting apparatus for correcting a drop-out in the stage following a time base corrector;

Figure 4A is a block circuit diagram showing part of an embodiment of drop-out correcting apparatus according to this invention; and

Figure 4B shows waveforms at points in the drop-out correcting apparatus of Figure 4A, for explaining the operation thereof.

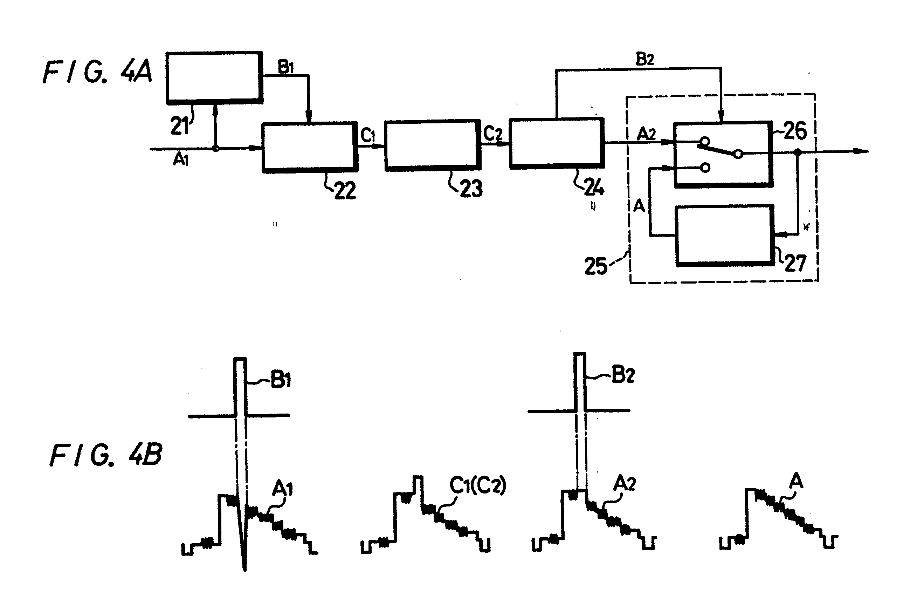

Figure 4A is a block circuit diagram showing part of an embodiment of drop-out correcting apparatus comprising a drop-out detecting circuit 21 which produces a drop-out detecting signal (or drop-out flag) when an analogue video signal contains a drop-out, a mixing circuit 22 which superimposes the drop-out detecting signal from the drop-out detecting circuit 21 upon the video signal, a TBC circuit 23 which removes a jitter component of the video signal, a drop-out detecting signal separating circuit 24 which separates the drop-out detecting signal from the video signal the jitter component of which has been removed by the TBC circuit 23 when the video signal contains the drop-out detecting signal, and a drop-out correcting circuit 25 that is formed of a switching circuit 26 and a 1H fixed delay circuit 27.

With the drop-out correcting apparatus of Figure 4A, when a reproduced analogue video signal, whose waveform is $A_1$ as shown in Figure 4B and which contains a drop-out, is supplied thereto, a signal or drop-out flag whose waveform is $B_1$ as shown in Figure 4B and which has a pulse width corresponding to the drop-out, is formed by the drop-out detecting circuit 21. The signal with the waveform $B_1$ is supplied to the mixing circuit 22, in which it is superimposed upon the video signal with the waveform $A_1$, thereby to form a mixed signal whose waveform is $C_1$ shown in Figure 4B. The mixed signal with the waveform $C_1$ is supplied to the TBC circuit 23, in which the jitter component thereof is removed, to form a mixed signal, whose waveform is $C_2$ shown in Figure 4B and which has a duration of time of exactly 1H.

Then, the mixed signal of the waveform $C_2$ is supplied to the drop-out detecting signal separating circuit 24 in which the signal portion thereof indicative of the drop-out flag is extracted by, for example, a slice circuit and then separated as the signal with a waveform $B_2$. The signal with the waveform $B_2$ is fed to the switching circuit 26. Since the switching circuit 26 is controlled to be changed over by the drop-out flag or the drop-out detecting signal with the waveform $B_2$, in the signal portion of the drop-out, the normal video signal (shown by the waveform A in Figure 4B) 1H before, and produced from the 1H delay circuit 27, is selected by the switching circuit 26, and the drop-out portion is interpolated or replaced by the video signal 1H before. Accordingly, the switching circuit 26 produces the video signal, the jitter component of which has been removed, and in which the drop-out portion has been interpolated or corrected.

In this embodiment, since the waveform $B_1$ of the drop-out flag is formed so as to become higher than the white level of the video signal, after the jitter component has been removed from the video signal by the TBC circuit 23, the drop-out flag can be simply extracted and then separated by the slice circuit of the drop-out signal separating circuit 24.

As the drop-out flag, it is possible to use, for example, a burst signal whose frequency is higher than the frequency band of the video signal. In this case, the drop-out detecting signal separating circuit 24 may be formed of a band-pass filter which extracts this burst signal.

Since the drop-out portion is discontinuous signal components and contains a high frequency (higher than 4.2 MHz), the drop-out detecting circuit 21 may detect the drop-out by a high-pass filter, and form the drop-out flag by waveform-reshaping the detecting signal.

Moreover, the drop-out may be detected at the stage of the frequency modulated (FM) signal, that is, before being demodulated to derive the video signal.

In this case, there is provided a monostable multivibrator that is triggered by the FM signal. If the pulse width of an output from the monostable multivibrator is set at a predetermined value, this monostable multivibrator ceases producing an output at the drop-out portion, so that the drop-out flag can be formed simply.

Such a drop-out correcting apparatus can also be employed when correcting drop-out in an analogue video signal reproduced from a magnetic tape.

While the above embodiment of the invention can correct drop-out of the luminance signal in the video signal, if a drop-out of the chrominance signal in the video signal is corrected, the phase of the chrominance signal is displaced. In this case, however, if a circuit for compensating for the phase of the chrominance signal is provided in the drop-out correcting circuit 25, it is possible to correct not only drop-out of the luminance signal but also drop-out of the chrominance signal.

Thus, since the drop-out detecting signal is superimposed on the drop-out portion of the video signal, thereby to provide the mixed signal, which is fed to the TBC circuit in which the jitter component of the video signal is removed, and the drop-out correcting circuit is operated by the drop-out detecting signal which is then separated, it is possible to correct drop-out of the video signal containing the jitter component simply.

When a drop-out noise, whose level is lower than the synchronizing signal, occurs in the video signal due to the drop-out, trouble frequently occurs in the synchronization separation in the TBC circuit and the synchronization separation of the servo circuit. However, with embodiments of the invention, since the drop-out detecting signal is superimposed upon the drop-out portion, there is no problem with the synchronization separation.

## Claims

1. A drop-out correcting apparatus comprising:

a drop-out detecting circuit (21) for detecting a drop-out period from a reproduced analogue radio frequency signal or reproduced analogue video signal;

a mixing circuit (22) for superimposing a drop-out detecting signal from said drop-out detecting circuit (21) upon said reproduced signal;

a time base fluctuation correcting circuit (23) for removing a jitter component of a mixed signal from said mixing circuit (22);

a drop-out detecting signal separating circuit (24) for separating said drop-out detecting signal from an output signal derived from said time base fluctuation correcting circuit (23); and

a drop-out correcting circuit (25) which corrects a drop-out of said output signal by said separated drop-out detecting signal.

2. A drop-out correcting apparatus according to claim 1 for a reproduced analogue video signal wherein said drop-out detecting signal has a level higher than a white level of said video signal.

3. A drop-out correcting apparatus according to claim 2 for a reproduced analogue video signal wherein said drop-out correcting circuit (25) is formed of a switching circuit (26) which is switched by said separated drop-out detecting signal, and a delay circuit (27) for interpolating a drop-out portion by a video signal one horizontal scanning period before.

## Revendications

1. Appareil de correction d'interruption comprenant :

un circuit de détection d'interruption (21) permettant de détecter une période d'interruption d'un signal radiofréquence analogique reproduit ou d'un signal vidéo analogique reproduit ;

un circuit mélangeur (22) qui permet de superposer un signal de détection d'interruption qui provient dudit circuit de détection d'interruption (21) audit signal reproduit ;

un circuit de correction de fluctuation de base de temps (23) qui permet d'enlever une composante de gigue d'un signal mélangé qui provient dudit circuit mélangeur (22) ;

un circuit de séparation de signal de détection d'interruption (24) pour séparer ledit signal de détection d'interruption d'un signal de sortie qui est extrait dudit circuit de correction de fluctuation de base de temps (23) ; et

un circuit de correction d'interruption (25) qui corrige une interruption dudit signal de sortie au moyen dudit signal de détection d'interruption séparé.

2. Appareil de correction d'interruption selon la revendication 1 pour un signal vidéo reproduit à l'identique dans lequel le signal de détection d'interruption a un niveau supérieur à un niveau blanc du signal vidéo.

3. Appareil de correction d'interruption selon la revendication 2 pour un signal vidéo reproduit à l'identique dans lequel le circuit de correction d'interruption (25) est composé d'un circuit de commutation (26) qui est commuté par le signal de détection d'interruption séparé et d'un circuit de retard (27) pour interpoler une partie d'interruption au moyen d'un signal vidéo sur une période de balayage horizontal antérieure.

**Patentansprüche**

1. Drop-Out-Korrektureinrichtung, bestehend aus einer Drop-Out-Detektorschaltung (21) zur Erfassung einer Drop-Out-Periode in einem reproduzierten analogen Hochfrequenzsignal oder einem reproduzierten analogen Videosignal,
einer Mischschaltung (22) zum Überlagern eines aus der Drop-Out-Detektorschaltung (21) kommenden Drop-Out-Detektorsignals und des reproduzierten Signals,
einer Zeitbasis-Korrekturschaltung (23) zur Korrektur von Zeitbasisschwankungen für die Entfernung einer Jitterkomponente in dem aus der Mischschaltung (22) kommenden Mischsignal,
einer Trennschaltung (24) zum Abtrennen des Drop-Out-Detektorsignals von dem Ausgangssignal der Zeitbasis-Korrekturschaltung (23) und
einer Drop-Out-Korrekturschaltung (25), die einen Drop-Out-Fehler des genannten Ausgangssignals durch das abgetrennte Drop-Out-Detektorsignal korrigiert.

2. Drop-Out-Korrektureinrichtung nach Anspruch 1 zur Korrektur eines reproduzierten analogen Videosignals, bei der der Pegel des Drop-Out-Detektorsignals größer ist als der Weißpegel des Videosignals.

3. Drop-Out-Korrektureinrichtung nach Anspruch 2 zur Korrektur eines reproduzierten analogen Videosignals, bei der die Drop-Out-Korrekturschaltung (25) einen von dem abgetrennten Drop-Out-Detektorsignal geschalteten Schalterkreis (26) aufweist sowie eine Verzögerungsschaltung (27) zur Interpolation eines Drop-Out-Abschnitts durch das um eine horizontale Abtastperiode vorauseilende Videosignal.

FIG. 1

FIG. 2

EP 0 174 822 B1

FIG. 3

EP 0 174 822 B1

*F I G. 4A*

B1

B2

A1

21

22

C1

23

C2

24

A2

26

A

25

27

*F I G. 4B*

B1

A1

C1(C2)

B2

A2

A